# EUROPEAN PATENT SPECIFICATION

(11) **EP 1 151 026 B1**
(45) Date of publication and mention of the grant of the patent: **26.04.2006**
(21) Application number: 00900100.9
(22) Date of filing: 17.01.2000
(51) Int. Cl.: C08G 63/86, C08G 63/82, C08G 63/87, C08G 63/16

(54) **CATALYSIS SYSTEM FOR THE PRODUCTION OF THERMOPLASTIC POLYESTERS WITH IMPROVED OPTICAL PROPERTIES**
KATALYTISCHE HERSTELLUNG VON THERMOPLASTISCHEN POLYESTERN MIT VERBESSERTEN OPTISCHEN EIGENSCHAFTEN
SYSTEME CATALYTIQUE POUR PRODUIRE DES POLYESTERS THERMOPLASTIQUES AVEC DES PROPRIETES OPTIQUES AMELIOREES

(30) Priority: 18.01.1999 IT MI990078
(43) Date of publication of application: 07.11.2001
(73) Proprietor: Selenis Italia SpA, 33170 Pordenone (IT)
(72) Inventor: FERRARI, Gianluca, I-30026 Portogruaro (IT); PONTANI, Alberto, I-33050 Terzo Di Aquileia (IT)
(74) Representative: Reniero, Cirillo Silvano
(86) International application number: PCT/IB2000/000047
(87) International publication number: WO 2000/042087

(56) References cited:
- EP-A- 0 850 967
- EP-A- 0 856 535
- DE-A- 4 319 008
- US-A- 4 208 527
- US-A- 5 681 918
- PATENT ABSTRACTS OF JAPAN vol. 1999, no. 11, 30 September 1999 (1999-09-30) & JP 11 166046 A (NIPPON ESTER CO LTD), 22 June 1999 (1999-06-22)
- PATENT ABSTRACTS OF JAPAN vol. 004, no. 151 (C-028), 23 October 1980 (1980-10-23) & JP 55 098225 A (NIPPON ESTER CO LTD), 26 July 1980 (1980-07-26)
- DATABASE CHEMABS [Online] CHEMICAL ABSTRACTS SERVICE, COLUMBUS, OHIO, US UMETA, MASAKI ET AL: "Manufacture of copolymerized polyethylene terephthalate with good transparency" retrieved from STN Database accession no. 128:154549 XP002133702 & JP 10 045883 A (TEIJIN LTD., JAPAN) 17 February 1998 (1998-02-17)

## Description

The present invention relates to the production of thermoplastic polyesters and, more particularly, to a process which allows products with improved optical properties to be obtained.

Some aromatic polyesters have become very widespread commercially, mainly owing to their high transparency and the neutral shade of their colour which gives them a glass-like appearance. Of these polyesters, those obtained by polycondensation of terephthalic acid and/or 2,6-naphthalenedicarboxylic acid (or ester derivatives thereof) with low molecular weight aliphatic and/or cycloaliphatic glycols, such as ethylene glycol, diethylene glycol, neopentyl glycol, cyclohexanedimethanol and mixtures thereof, may be mentioned. Such polyesters are used in various areas of application, such as packaging (bottles, phials, containers of various types, films produced by thermoforming), furnishing (transparent sheets for the production of clear displays, articles produced by thermoforming and injection moulding) and building (sheets for window structures).

A good measure of the optical properties of a material is provided by parameters such as the chromatic coordinates L*, a*, b* (in the CIE-LAB system, L* indicates the luminosity of the material on a light-darkness axis and tends towards zero for black polymers and 100 for white polymers; a* indicates the colour on a red-green axis and assumes positive values for polymers whose colour tends towards red, while it takes negative values for polymers whose colour tends towards green; and b* indicates the colour on a blue-yellow axis and takes positive values for polymers whose colour tends towards yellow and negative values for colours tending towards blue), the transmittance and the haze.

Great efforts have been made to improve the processes for production of said polyesters, in order to limit their degradation processes, improve their colour and increase their productivity.

Japanese patent JP-B-55/98,225 describes a method for producing a polyester by direct esterification of a bifunctional carboxylic acid consisting mainly of terephtalic acid with glycol, followed by policondensation thereof, using a catalyst comprising a germanium compound added to a cobalt compound and a phosphoric compound. The quantity of germanium, cobalt and phosphoric compounds being regulated by means of equations.

US-A-3,884,854 describes a catalytic system for a process for the production of copolyesters having good optical properties, which consists of an antimony compound of the formula Sb (Y)ₙ or Y₃Sb=O and an arsenic compound of the formula As (Y)ₙ. As₂O₃, As₂O₅ or Y₃As=O, in which n is 3 or 5 and Y is selected from the group consisting of R, COOR, SR, COOR'SH and SR'COOR in which R is alkyl, cycloalkyl, aryl, aralkyl and alkaryl and R' is a divalent radical selected from the group consisting of alkylene, cycloalkylene, arylene, aralkylene and alkarylene.

US-A-3,929,728 describes the use of a catalytic system for obtaining excellent luminosity and transparency, which consists of a polycondensation catalyst based on antimony, a compound selected from the group consisting of α-hydroxycarboxylic acids having 2 to 30 carbon atoms, α,β-dicarboxylic acids having 4 to 30 carbon atoms, and esters, amides, anhydrides, mixed anhydrides and halides of said α,β-dicarboxylic acids.

Japanese Patent JP-B-53/24,119 describes a process for the production of copolyesters in which catalysts preferably formed from mixtures of manganese and germanium stabilised with phosphorus compounds are used. The amount of catalyst used, relative to the reaction mixture, varies between 0.005 and 0: mole %.

US-A-3,962,189 describes a process for the production of polyethylene terephthalate which envisages the reaction of dimethyl terephthalate with ethylene glycol in the presence of 20-110 ppm of manganese salts, 5-35 ppm of cobalt salts, 20-60 ppm of a titanium alkoxide and 7-35 ppm of an alkali or alkaline-earth metal alkoxide.

US-A-4,058,507 describes a two-stage reaction, the first stage being a transesterification and the second one a polycondensation, in which a transesterification catalyst consisting of 20-150 millimole % of calcium acetate and 2-25 millimole % of cobalt acetate is used in the first stage, the percentages being based on the lower quantity of dialkyl ester of the difunctional dicarboxylic acid.

US-A-4,010,145 shows that mixtures of organic or inorganic manganese and cobalt salts with acetyl triisopropyl titanate and a phosporic ester give rise to a bathochromic effect, which is per se undesiratile. Moreover, this catalytic system produces an increased rate of copolyester production, increased gloss and excellent stability against the effects of thermooxidation, hydrolysis and ultraviolet radiation. In order to achieve it, this document suggests adding to the abovementioned catalytic system also an antimony compound and adding the phosphoric ester only when the polycondensation reaction takes place.

US-A-4,133,800 describes a two-stage process in which in the first stage, that of esterification, 10 to 200 ppm of germanium dioxide and at least one alkali metal hydroxide equivalent per mole of germanium dioxide are used, while in the second stage, that of polycondensation, 100 to 1000 ppm of antimony trioxide are used. It is also possible to use the usual additives used in copolyester production, such as phosphorus compounds, fillers, optical whiteners, dyes, pigments and chain-lengthening agents.

US-A-4,128,533 uses a catalytic system consisting of a combination of manganese, magnesium, titanium and antimony compounds, the latter being added just before the polycondensation stage.

US-A-4,128,534 uses the same catalytic system as the previous patent, but without using antimony salts.

US-A-4,119,614 uses catalysts based on germanium hydroxide and tetraalkylammonium hydroxides for the polycondensation stage.

US-A-4,208,527 describes a two-stage process: an esterification stage and a polycondensation stage. The first stage is catalysed by adding 35-290 ppm of a manganese (II) salt and 6-95 ppm of a cobalt (II) salt, followed, at the end of the esterification, by addition of 40-140 ppm of a phosphorus compound, while the second stage is catalysed by 115-230 ppm of a germanium (IV) salt and 2-20 ppm of a titanium salt.

US-A-4,499,226 uses a catalytic system consisting of 70-250 ppm of antimony salts (calculated as elemental antimony), 5-60 ppm of a phosphorus compound (calculated as elemental phosphorus) and 5-50 ppm of a cobalt salt (calculated as elemental cobalt).

US-A-4,609,721 uses 325-600 ppm of an antimony-based catalyst, relative to the polymer produced.

US-A-4,959,449 describes the combined use of cobalt and ultramarine blue for obtaining polyarylates having good optical properties.

US-A-5,565,545 describes a process for maintaining the haze at a reduced level by using at least 110 ppm of antimony and 0 to 50 ppm of germanium. A phosphorus-based stabiliser is also used. During polycondensation, a cobalt salt may be added in order to adjust the colour.

US-A-5,596,068 describes a batch process for the production of copolyesters which uses, as the catalyst, a mixture consisting of 50-350 ppm of an antimony salt, 1-100 ppm of a germanium salt and 1-125 ppm of a phosphorus salt, all calculated on the basis of the elements.

The object of the present invention is to provide a process which allows the production of thermoplastic polyesters with improved optical properties, such as high transparency, low haze, high luminosity and neutral colour shade. Such characteristics can be represented by a value of L* greater than 63, a value of a* close to zero (+1 > a* > -1.5) and a value of b* which is negative or slightly positive (b* < 1:0) to be measured in the manner illustrated below.

This object is achieved, according to the present invention, by a process for the preparation of thermoplastic polyesters in accordance with claim 1.

Preferably, the process according to the present invention can be performed for those polyesters which have a low crystallisation tendency and therefore cannot be subjected to a regradation process.

Particularly good values for the optical properties are obtained when other metals, in particular antimony, calcium, titanium, arsenic, manganese and magnesium, are absent or are treated in such a manner that they are completely inactive during the polycondensation stage.

Surprisingly, it has been found that the synergic effect provided by the catalysis and optical correction system according to the present invention allows the polymerisation to be carried out in the melt phase of the polyesters over long periods of time (up to more than four hours) at high temperatures (up to 290 C) without any significant change in the colour, luminosity and haze of the end product. Such a catalysis and optical correction system enables polyesters with high intrinsic viscosity (about 0,81 dl/g), with excellent optical properties, to be obtained directly in the melt phase so that a regradation process is totally unuseful. In contrast, the polycondensation catalysts of the prior art other than germanium, for example Sb and Ti, produce under analogous conditions strongly coloured polymers independently of the optical correction system used, owing to the fact that degradation processes take place in the reaction mass. Meanwhile, the use of catalysts based on germanium in combination with organic optical correcting agents soluble in the polymer does not achieve a simple and efficient correction of the colour as do the cobalt salts when neutralised with phosphorus derivatives. Such a correction becomes particularly difficult and hardly efficient in those cases in which the polycondensation is extended over a long period so as to increase the intrinsic viscosity of the polymer. The synergic action produced by the combined use of germanium and cobalt according to the methods described in the present invention allows the esterification and polycondensation processes to be carried out efficiently by means of milder control of the process components which determine the temperature of the reaction mass. This leads to a reduction in the operating costs and enables previously impossible operations to be carried out.

The polyester production is achieved by reacting an aromatic, aliphatic or cycloaliphatic dicarboxylic acid or an ester derivative thereof on its own or in a mixture with one or more aliphatic or cycloaliphatic glycols to give the corresponding ester and then performing a polycondensation reaction to give the end product. Usually, it is preferred to use acids such as terephthalic acid, isophthalic acid, 2,6-naphthalenedicarboxylic acid, adipic acid, stilbenic acid, sulphoisophthalic acid and ester derivatives thereof. Of the glycols which can be used, preference is given to ethylene glycol, diethylene glycol, cyclohexanedimethanol, neopentyl glycol, 1,4-di(2-hydroxyethyl)benzene and mixtures thereof.

Of the germanium derivatives which can be used as catalysts, preference is given to germanium derivatives soluble in the polymer, such as non-crystalline germanium oxides, crystalline oxides treated with hydroxy compounds, germanium hydroxide, and germanium acid salts.

The cobalt compound is preferably introduced at a concentration of at least 20 ppm, more preferably at a concentration of at least 40 ppm, most preferably at a concentration of at least 60 ppm relative to the final polymer weight.

Of the cobalt derivatives, preference is given to cobalt acetate tetrahydrate, cobalt aluminate, cobalt benzoate and cobalt chloride. Particular preference is given to cobalt acetate tetrahydrate.

Of the phosphorus-containing compounds, preference is given to phosphoric acid, polyphosphoric acid, phosphorous acid, trialkyl phosphates, such as trimethyl phosphate, triethyl phosphate and triphenyl phosphate. If desired, mono- and diaryl phosphates may also be used. Particular preference is given to phosphoric acid, polyphosphoric acid and trialkyl phosphates. The catalysis and optical correction system is added to the reaction mixture and dissolved therein in a single stage or in several stages. In particular, the addition of the cobalt-containing compound may be effected at various times during the process, for example at the beginning of esterification at the end of esterification, at the beginning of polycondensation, or at the intermediate stages. The addition of the phosphorus-containing compound may be effected simultaneously with or subsequently to the addition of the cobalt-containing compound since, as is known, the addition of cobalt compounds in the absence of phosphorus gives rise to poor optical properties.

The esterification and polycondensation reactions are known to those skilled in the art and will not be described here in greater detail, the inventive conditions of such reactions will be further described in the following examples.

The present invention will now be described in more detail with reference to the following examples and comparative examples, which serve to illustrate the essential characteristics and considerable advantages thereof. The chromatic coordinates of the polymer (expressed in terms of the CIE-LAB system) were measured with a Macbeth Color-Eye 3000 spectrophotometer equipped with an integrated sphere diffused at 8°, xenon flash lamp, D65 illuminant, 10° observer, dimensions of the sphere 15.2 cm, including specular components and UV, measuring area 25.4 cm and a cell for granules with quartz glass of dimensions 100x100x40 mm. The polymer was introduced into the measuring cell in the form of cylindrical granules about 3x3x2 mm in size.

### Example 1

### a) Preparation of the reaction mixture

200 ppm of tetraethylammonium hydroxide was added at room temperature to 36.7 kg of terephthalic acid, 6.5 kg of isophthalic acid and 21.0 kg of ethylene glycol so as to obtain a homogeneous paste, which constitutes the reaction mixture. 7.2 g of GeO₂, dissolved in 750 g of water, was also added to this paste.

### b) Esterification reaction

A 150 I reactor was charged with the paste, and the pressure was then brought to 2.5 bar by charging nitrogen. The temperature was brought to 210°C over a period of thirty minutes and from 210°C to 250°C over a period of four hours.

The reactor was fitted at the top with a distillation column packed with metal rings. The column was connected to a condenser, which was serially connected to a receiver for collecting the condensate. The reactor was left at 250°C and 2.5 bar with stirring for another sixty minutes, during which about 9.4 kg of water were removed.

### c) Addition of additives

While maintaining the reactor at the same pressure and temperature under stirring, 10.6 g of Co (CH₃COO)₂·4 H₂O dissolved in 300 g of ethylene glycol and 8.2 g of polyphosphoric acid (P₂O₅ content 84%), dissolved in 200 g of ethylene glycol, were added. Between the addition of a reagent and that of the following one, the reaction mixture was stirred for five minutes.

### d) Polycondensation

The pressure inside the reactor was brought from 2.5 bar to atmospheric pressure over a period of about 15 minutes. The temperature of the heating mantle was then brought to about 285°C, while the pressure was simultaneously reduced to less than 1 mm Hg. The polymerisation reaction proceeded with the evolution of ethylene glycol, which was collected in a suitable condenser. The reaction was considered complete as soon as the stirrer motor reached a predetermined level of power consumption.

### e) Extrusion and granulation

The polymer obtained was then extruded through an eight-slot extrusion die, cooled in water and granulated. The so obtained product exhibited an intrinsic viscosity, measured in dichloroacetic acid at 25°C, of 0.81 dl/g. Its chromatic coordinates and its degree of opalescence are listed in Tables 1 and 2.

### Examples 2-13

The operating steps indicated in Example 1 were repeated, varying only the catalysts and the polycondensation temperatures. The results are listed in Tables 1 and 2.

As will be readily understood, Examples 1 and 13 were carried out according to the present invention, while the other examples constitute examples of catalytic systems according to the prior art. As can be seen from Tables 1 and 2, the catalysis and optical correction system used according to the process of the present invention enables excellent optical characteristics to be obtained without giving rise to the drawbacks of the catalysis and optical correction systems of the prior art.

**Table 1- Optical properties**

| Ex. | Catalyst | Temp. | Int. Cat. | L* | a* | b* |
|---|---|---|---|---|---|---|
| 1 | GeO₂ 7.2 g | 285°C | a) | 69.3 | -0.1 | -2.0 |
| | CoAc₂·4 H₂O 10.6 g | | c) | | | |
| | HPOₙ 8.2 g | | c) | | | |
| 2 | SbAc₃ 31.9 g | 271°C | c) | 63.1 | -1.4 | -0.1 |
| | CoAc₂·4 H₂O 14.8 g | | c) | | | |
| | HPOₙ 10.2 g | | c) | | | |
| 3 | SbAc₃ 30.7 g | 270°C | c) | 64.2 | -1.8 | 3.6 |
| | CoAc₂·4 H₂O 10.6 g | | c) | | | |
| | HPOₙ 6.1 g | | c) | | | |
| 4 | SbAc₃ 36.8 g | 271°C | c) | 64.4 | -2.6 | 6.1 |
| | CoAc₂·4 H₂O 4.2 g | | c) | | | |
| | HPOₙ 4.8 g | | c) | | | |
| 5 | GeO₂ 7.2 g | 285°C | a) | 65.1 | -3.4 | -2.0 |
| | Blue 176 mg | | a) | | | |
| | Red 150 mg | | a) | | | |
| | HPOₙ 2.1 g | | c) | | | |
| 6 | GeO₂ 7.2 g | 284°C | a) | 73.8 | -2.2 | 6.8 |
| | Blue 10 mg | | a) | | | |
| | Red 15 mg | | a) | | | |
| | HPOₙ 2.1 g | | c) | | | |
| 7 | GeO₂ 7.2 g | 285°C | a) | 68.6 | -2.8 | 1.6 |
| | Blue 75 mg | | a) | | | |
| | Red 75 mg | | a) | | | |
| | HPOₙ 3.4 g | | c) | | | |
| 8 | GeO₂ 5.8 g | 285°C | a) | 69.9 | -1.3 | 2.8 |
| | Blue 60 mg | | a) | | | |
| | Red 100 mg | | a) | | | |
| | HPOₙ 3.4 g | | c) | | | |
| 9 | GeO₂ 5.1 g | 285°C | a) | 67.2 | -0.9 | 1.4 |
| | Blue 100 mg | | a) | | | |
| | Red 160 mg | | a) | | | |
| | HPOₙ 3.4 g | | c) | | | |
| 10 | SbAc₃ 22.1 g | 271°C | a) | 70.6 | -1.6 | 6.1 |
| | GeO₂5.26 g | | a) | | | |
| | CoAc₂·4 H₂O 4.23 g | | a) | | | |
| | HPOₙ 4.76 g | | c) | | | |
| 11 | SbAc₃ 27.0 g | 273°C | a) | 67.0 | -1.10 | 2.0 |
| | GeO₂ 3.6 g | | a) | | | |
| | CoAC₂·4 H₂O 10.6 g | | a) | | | |
| | HPOₙ 8.4 g | | c) | | | |
| 12 | SbAc₃ 30.7 g | 270°C | a) | 64.4 | -1.4 | 1.8 |
| | GeO₂ 1.4 g | | a) | | | |
| | CoAc₂·4 H₂O 10.6 g | | a) | | | |
| | HPOₙ 8.4 g | | c) | | | |
| 13 | GeO₂ 7.2 g | 286°C | a) | 66.8 | -0.8 | -1.5 |
| | CoAc₂·4 H₂O 10.6 g | | c) | | | |
| | HPOₙ 6.8 g | | c) | | | |

TABLE 2 - Qualitative assessment of the degree of opalescence of the products obtained in Examples 1-13, which, after being dried under nitrogen at 150 mbar for 12 hours, were extruded in the form of thin sheets of 5 mm thickness. Their degree of opalescence was determined by examining them under diffused light in a direction perpendicular to the light source.

Ex. Degree of opalescence
1 Nearly absent
2 Significant
3 Significant
4 Significant
5 Nearly absent
6 Nearly absent
7 Nearly absent
8 Nearly absent
9 Nearly absent
10 Significant
11 Significant
12 Significant
13 Nearly absent

## Claims

1. A process for the preparation of thermoplastic polyesters having a low light diffusing tendency, a high luminosity and a neutral shade of colour from aromatic, aliphatic or cycloaliphatic dicarboxylic acids or mixtures thereof or from an alkyl ester thereof with aliphatic and/or cycloaliphatic alcohols and from one or more aliphatic or cycloaliphatic glycols, comprising a catalysis and optical correction system consisting of a germanium (IV) compound, a cobalt salt and at least one phosphorous derivative selected from the group including phosphoric acid, polyphosphoric acid, phosphorous acid, trialkyl phosphate and triphenyl phosphate, the cobalt concentration being at least 20 ppm, measured as elemental cobalt and based on the final polymer weight, the cobalt/phosphorous (expressed as elements) weight ratio ranging from 1:3 to 3:1, the process comprising a step of preparation of an ester and a melt-phase polycondensation of the latter, **characterized in that**
- the amount of other elements, such as antimony, calcium, titanium, arsenic, manganese and/or magnesium, in said catalytic system is below the threshold of catalytic activity for said polycondensation reaction, and
- said melt-phase polycondensation reaction is carried out till an intrinsic viscosity of about 0.81 dl/g is attained.

2. A process according to claim 1, in which said dicarboxylic acid is an aromatic dicarboxylic acid or an esterifiable derivative thereof.

3. A process according to claim 1 or 2, in which said dicarboxylic acid is selected from the group consisting of terephthalic acid, isophthalic acid, 2,6-naphthalenedicarboxylic acid, adipic acid, stilbenic acid, sulphoisophthalic acid or esters thereof.

4. A process according to claim 1 or claim 3, in which said dicarboxylic acid is terephthalic acid.

5. A process according to any one of the preceding claims, **characterised in that** said glycol is selected from the group consisting of ethylene glycol, diethylene glycol, cyclohexanedimethanol, neopentyl glycol, 1,4-di (2-hydroxyethyl) benzene and mixtures thereof.

6. A process according to any one of claims 1 to 5, **characterised in that** elements other than germanium are treated in such a way that they are completely inactive to the polycondensation reaction.

7. A process according to claim 6, in which the antimony, calcium, titanium, arsenic, manganese and magnesium salts are treated in such a way that they are completely inactive to the polycondensation reaction.

8. A process according to any one of the preceding claims, **characterised in that** said germanium (IV) compound is selected from the group consisting of non-crystalline germanium oxides, crystalline germanium oxides treated with hydroxy compounds, germanium hydroxide and germanium acid salts.

9. A process according to any previous claim, **characterised in that** the temperature of the polycondensation stage is higher than 270°C.

10. A process as claimed in any previous claim, **characterised in that** the preparation is directly carried out during said melting phase condensation.

## Patentansprüche

1. Verfahren zur Herstellung von thermoplastischen Polyestern mit geringer Lichtstreuungstendenz, großer Helligkeit und einer neutralen Farbschattierung aus aromatischen, aliphatischen oder cycloaliphatischen Dicarbonsäuren oder Gemischen davon oder aus einem Alkylester davon mit aliphatischen und/oder cycloaliphatischen Alkoholen und aus einem oder mehreren aliphatischen oder cycloaliphatischen Glykolen, umfassend eine Katalyse und ein optisches Korrektursystem, bestehend aus einer Germanium-(IV)-Verbindung, einem Kobaltsalz und mindestens einem Phosphor-Derivat, ausgewählt aus Phosphorsäure, Polyphosphorsäure, Phosphonsäure, Trialkylphosphat und Triphenylphosphat, wobei die Kobaltkonzentration mindestens 20 ppm, gemessen als elementares Kobalt und basierend auf dem endgültigen Polymergewicht, beträgt, wobei das Kobalt/Phosphor Gewichtsverhältnis (ausgedrückt in Elementen) im Bereich von 1:3 bis 3:1 liegt, wobei das Verfahren einen Herstellungsschritt für einen Ester und eine Schmelzphasen-Polykondensation des letzteren umfasst, **dadurch gekennzeichnet, dass**
- die Menge anderer Elemente, wie Antimon, Calcium, Titan, Arsen, Mangan und/oder Magnesium, im katalytischen System unter dem Grenzwert der katalytischen Aktivität für die Polykondensationsreaktion liegt, und
- die Schmelzphasen-Polykondensationsreaktion durchgeführt wird bis eine Grenzviskosität von etwa 0,81 dl/g erreicht ist.

2. Verfahren nach Anspruch 1, wobei die Dicarbonsäure eine aromatische Dicarbonsäure oder ein veresterbares Derivat davon ist.

3. Verfahren nach Anspruch 1 oder 2, wobei die Dicarbonsäure ausgewählt ist aus Terephthalsäure, Isophthalsäure, 2,6-Naphthalendicarbonsäure, Adipinsäure, Stilbensäure, Sulphoisophthalsäure oder Estern davon.

4. Verfahren nach Anspruch 1 oder Anspruch 3, wobei die Dicarbonsäure Terephthalsäure ist.

5. Verfahren nach einem der vorstehenden Ansprüche, **dadurch gekennzeichnet, dass** das Glykol ausgewählt ist aus Ethylenglykol, Diethylenglykol, Cyclohexandimethanol, Neopentylglykol, 1,4-Di(2-hydroxyethyl)benzol und Gemischen davon.

6. Verfahren nach einem der Ansprüche 1 bis 5, **dadurch gekennzeichnet, dass** von Germanium verschiedene Elemente in einer solchen Weise behandelt werden, dass sie gegenüber der Polykondensationsreaktion vollständig inaktiv sind.

7. Verfahren nach Anspruch 6, wobei die Antimon-, Calcium-, Titan-, Arsen-, Mangan- und Magnesiumsalze in einer solchen Weise behandelt werden, dass sie gegenüber der Polykondensationsreaktion vollständig inaktiv sind.

8. Verfahren nach einem der vorstehenden Ansprüche, **dadurch gekennzeichnet, dass** die Germanium-(IV)-Verbindung ausgewählt ist aus nicht-kristallinen Germaniumoxiden, kristallinen Germaniumoxiden, die mit Hydroxyverbindungen behandelt wurden, Germaniumhydroxid und Germaniumsäuresalzen.

9. Verfahren nach einem der vorstehenden Ansprüche, **dadurch gekennzeichnet, dass** die Temperatur der Polykondensationsstufe höher als 270°C ist.

10. Verfahren nach einem der vorstehenden Ansprüche, **dadurch gekennzeichnet, dass** die Herstellung direkt während der Schmelzphasen-Kondensation durchgeführt wird.

## Revendications

1. Procédé de préparation de polyesters thermoplastiques possédant une faible tendance à la diffusion de lumière, une luminosité élevée et une nuance de couleur neutre à partir d'acides dicarboxyliques aromatiques, aliphatiques ou cycloaliphatiques ou de mélanges de ceux-ci ou à partir d'un ester d'alkyle de ceux-ci et d'alcools aliphatiques et/ou cycloaliphatiques et à partir d'un ou plusieurs glycols aliphatiques ou cycloaliphatiques, comprenant un système catalytique et un système de correction optique consistant en un composé de germanium (IV), un sel de cobalt et au moins un dérivé phosphoré choisi dans le groupe comprenant acide phosphorique, acide polyphosphorique, acide phosphoreux, trialkyle phosphate et triphényle phosphate, la concentration en cobalt étant d'au moins 20 ppm, mesurée à titre de cobalt élémentaire et basée sur le poids de polymère final, le rapport pondéral cobalt/phosphore (exprimés comme éléments) variant de 1:3 à 3:1, le procédé comprenant une étape de préparation d'un ester et une polycondensation à l'état fondu du dernier, **caractérisé en ce que**
- la quantité des autres éléments, tels qu'antimoine, calcium, titane, arsenic, manganèse et/ou magnésium, dans ledit système catalytique est inférieure au seuil d'activité catalytique de ladite réaction de polycondensation, et
- ladite réaction de polycondensation à l'état fondu est réalisée jusqu'à ce qu'une viscosité intrinsèque d'environ 0,81 dl/g soit atteinte.

2. Procédé selon la revendication 1, dans lequel ledit acide dicarboxylique est un acide dicarboxylique aromatiqùe ou un dérivé estérifiable de celui-ci.

3. Procédé selon la revendication 1 ou 2, dans lequel ledit acide dicarboxylique est choisi dans le groupe consistant en l'acide téréphtalique, l'acide isophtalique, l'acide 2,6-naphtalènedicarboxylique, l'acide adipique, l'acide stilbénique, l'acide sulfoisophtalique ou des esters de ceux-ci.

4. Procédé selon la revendication 1 ou la revendication 3, dans lequel ledit acide dicarboxylique est l'acide téréphtalique.

5. Procédé selon l'une quelconque des revendications précédentes, **caractérisé en ce que** ledit glycol est choisi dans le groupe consistant en l'éthylène glycol, le diéthylène glycol, le cyclohexanediméthanol, le néopentyl glycol, le 1,4-di(2-hydroxyéthyl) benzène et des mélanges de ceux-ci.

6. Procédé selon l'une quelconque des revendications 1 à 5, **caractérisé en ce que** des éléments autres que le germanium sont traités de telle manière qu'ils sont complètement inactifs dans la réaction de polycondensation.

7. Procédé selon la revendication 6, dans lequel les sels d'antimoine, de calcium, de titane, d'arsenic, de manganèse et de magnésium sont traités de telle manière qu'ils sont complètement inactifs dans la réaction de polycondensation.

8. Procédé selon l'une quelconque des revendications précédentes, **caractérisé en ce que** ledit composé de germanium (IV) est choisi dans le groupe consistant en des oxydes de germanium non cristallins, des oxydes de germanium cristallins traités par des composés hydroxy, de l'hydroxyde de germanium et des sels acides de germanium.

9. Procédé selon l'une quelconque des revendications précédentes, **caractérisé en ce que** la température de l'étape de condensation est supérieure à 270°C.

10. Procédé selon l'une quelconque des revendications précédentes, **caractérisé en ce que** la préparation est effectuée directement au cours de ladite condensation à l'état fondu.
